# EUROPEAN PATENT APPLICATION

(11) **EP 1 970 398 A1**
(43) Date of publication of application: **17.09.2008**
(21) Application number: 07103939.0
(22) Date of filing: 12.03.2007
(51) Int. Cl.: C08G 77/46, C08G 77/08

(54) **Use of Tocopherol**

(71) Applicant: Schering Oy, 20101 Turku (FI)
(72) Inventor: Tiitinen, Emilia, 20700, TURKU (FI); Jukarainen, Harri, 21620 Kaarina (FI)
(74) Representative: Suominen, Kaisa Liisa

(57) **Abstract**

The present invention relates to the use of tocopherol as a co-catalyst in the ring opening polymerisation of cyclic siloxanes. The present invention further relates to a method for manufacturing hydrophilic polysiloxanes, wherein a hydrido-containing cyclic siloxane is reacted with a hydrophilic molecule comprising a carbon-carbon double bond, having the general formula (I) H₂C=CH-(CHR)ₙ-O-(CHR¹CR²R³)ₘR⁴ or (II) H₂C=CH-(CHR)ₙ-R⁵, wherein n is an integer from 0 to 4, m is an integer from 0 to 5, R, R¹, R², R³ and R⁴ are each independently hydrogen or a C₁ to C₆ alkyl, R⁵ is a saturated cyclic hydrocarbon containing carbonyl group, in the presence of a first catalyst to obtain a monomer, and polymerising said monomer in the presence of a second catalyst and tocopherol as a co-catalyst.

## Description

The invention relates to the use of tocopherol as well as to a method for manufacturing hydrophilic polysiloxanes. The invention also relates to hydrophilic polysiloxanes, to a method for manufacturing hydrophilic siloxane elastomers, as well as to hydrophilic siloxane elastomers.

### BACKGROUD

Polysiloxanes are applied in many ways in industry e.g. as surfactants, coatings, dispersion agents, dispersion stabilisers, release agents, food additives, sealants, tubes and medical applications. The most commonly used polysiloxane is polydimethylsiloxane (PDMS), which is a highly hydrophobic, stable and temperature resistant material.

However, when preparing polysiloxanes by ring opening polymerisation of cyclic siloxanes with phosphazene base catalysts, a large amount of catalyst is required, leading to cross-linking of the polymers during storage.

Sterically hindered phenols, such as α-tocopherols and their derivatives have been used in the polymerisation reactions to slow down the reaction and to prevent the formation of gels and oligomers. Tocopherol has also been used as a stabiliser due to its anti-oxidant effect.

There is, however, still a need to provide a co-catalyst suitable for reducing the amount of catalyst used during the ring opening polymerisation of cyclic siloxanes. There is also a need to provide a component capable of strongly reducing, if not completely avoiding, the cross-linking of the polymers thus obtained during storage.

### OBJECTS AND SUMMARY OF THE INVENTION

In view of the above-mentioned, it is an object of the present invention to provide a co-catalyst suitable for reducing the amount of catalyst. It is also an object to reduce the cross-linking of the polymers during storage.

The present invention thus relates to the use of tocopherol as a co-catalyst in the ring opening polymerisation of cyclic siloxanes.

The present invention further relates to a method for manufacturing hydrophilic polysiloxanes, wherein a hydrido-containing cyclic siloxane is reacted with a hydrophilic molecule comprising a carbon-carbon double bond, having the general formula (I) or (II)

(I) H₂C=CH-(CHR)ₙ-O-(CHR¹CR²R³)ₘR⁴

(II) H₂C=CH-(CHR)ₙ-R⁵

wherein n is an integer from 0 to 4, m is an integer from 0 to 5, R, R¹, R², R³ and R⁴ are each independently hydrogen or a C₁ to C₆ alkyl, R⁵ is a saturated cyclic hydrocarbon containing carbonyl group, in the presence of a first catalyst to obtain a monomer, and polymerising said monomer in the presence of a second catalyst and tocopherol as a co-catalyst.

The invention further relates to a hydrophilic polysiloxane obtainable by the method according to the present invention.

The invention yet further relates to a method for manufacturing a hydrophilic siloxane elastomer, comprising cross-linking a polysiloxane according to the present invention, in the presence of a cross-linking catalyst, as well as to a hydrophilic siloxane elastomer obtainable by said method.

### DETAILED DESCRIPTION OF THE INVENTION

The present invention relates to the use of tocopherol as a co-catalyst in the ring opening polymerisation of cyclic siloxanes.

As will be shown later in the Experimental part, using tocopherol as a co-catalyst in the ring opening polymerisation of cyclic siloxanes, the amount of catalyst needed for such reaction is reduced. Furthermore, the cross-linking of the polymers during storage is greatly reduced when tocopherol has been used as a co-catalyst in the ring opening polymerisation.

According to one embodiment of the present invention said tocopherol is selected from the group consisting of D'L-alpha-tocopherol, RRR-alpha-tocopherol, D'L-alpha-tocopherol acetate and RRR-alpha-tocopherol acetate. Mixtures of these compounds can naturally also be used.

According to another embodiment the cyclic siloxane is selected from the group consisting of heptamethyl cyclotetrasiloxane and tetramethyl cyclotetrasiloxane.

The present invention further relates to a method for manufacturing hydrophilic polysiloxanes, wherein a hydrido-containing cyclic siloxane is reacted with a hydrophilic molecule comprising a carbon-carbon double bond, having the general formula (I) or (II)

(I) H₂C=CH-(CHR)ₙ-O-(CHR¹CR²R³)ₘR⁴

(II) H₂C=CH-(CHR)ₙ-R⁵

wherein n is an integer from 0 to 4, m is an integer from 0 to 5, R, R¹, R², R³ and R⁴ are each independently hydrogen or a C₁ to C₆ alkyl, R⁵ is a saturated cyclic hydrocarbon containing carbonyl group, in the presence of a first catalyst to obtain a monomer, and polymerising said monomer in the presence of a second catalyst and tocopherol as a co-catalyst.

The details and embodiments listed above also apply to the method according to the present invention.

The present invention thus relates to a method for manufacturing hydrophilic polysiloxanes that provides polydimethyl siloxane polymers that do not exhibit any undesired cross-linking during the polymerisation and the storage of the polymer. These polymers can be cross-linked to form a more hydrophilic elastomer than the previously known PDMS elastomers.

According to an embodiment of the invention the monomer is purified before the polymerisation. This allows the manufacture of an elastomer that is essentially free from catalyst residues from the hydrosilation reaction. When a platinum catalyst is used in this first step, the resulting elastomer made according to this embodiment is essentially platinum free, if platinum is not used in the cross-linking step.

The monomer obtained can be purified with any known method, such as by distillation under reduced pressure. The aim of the purification is the elimination of unreacted unsaturated starting material, alkylated products formed thereof and especially the elimination of the residues of the catalyst, such as platinum residues.

According to an embodiment the hydrido-containing cyclic siloxane is selected from the group consisting of heptamethyl cyclotetrasiloxane and tetramethyl cyclotetrasiloxane. Also other cyclic siloxanes can be used, such as octamethyl cyclotetrasiloxane.

According to another embodiment the hydrophilic molecule is selected from the group consisting of allyl ethyl ether, allyl methyl ether, allyl propyl ether, allyl butyl ether, allyl pentyl ether, butyl vinyl ether, propyl vinyl ether, tert-pentyl vinyl ether and allyl acetate.

The reaction temperature in the hydrosilation reaction can vary from room temperature up to 250-300 °C, preferably it is from 20 to 170 °C and more preferably from 50 to 170 °C, even more preferably from 50 to 95 °C. It may be necessary to heat the reaction to 100 °C or above, especially if the activity of the catalyst has been reduced by adding water to the reaction mixture or by slurrying the catalyst into diluent.

Suitable catalysts are, for example, platinum based or platinum complex based hydrosilylation catalysts that are described for example in US 3,220,972; US 3,715,334; US 3,775,452; US 3,814,730; US 4,421,903 and US 4,288,345. Some suitable catalysts are chloroplatinate, platinum-acetylacetonate, platinum divinyldisiloxane complex, hexamethyldiplatinum and complexes of platinum halides with different compounds having double bonds, such as ethylene, propylene, organic vinylsiloxanes or styrene. Also other catalysts, such as ruthenium, rhodium, palladium, osmium and iridium as well as their complexes, can be used.

According to a preferred embodiment the first catalyst is a platinum catalyst. As the monomer is preferably purified before polymerisation, the obtained polymer and further the obtained elastomer are platinum free, provided that platinum is not used in the crosslinking step.

The polymerisation may be a homopolymerisation or a copolymerisation, in which case a comonomer is present in the polymerisation step. The comonomer can for example be a vinyl comonomer selected from the group consisting of vinyl containing cyclic and linear low molecular weight siloxanes, such as 1,3,5,7-tetravinyl-1,3,5,7-tetramethyl cyclotetrasiloxane. The cyclic siloxane can thus be copolymerised with different cyclic siloxanes and/or linear siloxanes.

The ring opening polymerisation is typically catalysed by either acidic or basic catalysts. Examples of suitable basic catalysts are alkaline metal hydroxides and their complexes with alcohols, alkaline metal alkoxides, alkaline metal silanolates and different phosphorous nitric halides. Preferred catalysts are potassium silanolates and phosphazene bases. Examples of suitable acidic catalysts are strong acids, such as sulphuric acid, acetic acid or trifluoromethane sulfonic acid, Lewis acids, such as boron trifluoride or aluminium chloride, or strongly acidic ion exchange resins.

The polymerisation can, for example, be carried out in a solvent, without a solvent or as an emulsion. In some cases, a suitable solvent can be used in order to regulate the reaction rate and in order to achieve a certain degree of polymerisation. If a solvent is used, some suitable solvents are liquid hydrocarbons such as hexane and heptane, silicones such as polydiorganosiloxanes, silanols such as trialkylsilanol and in some cases alcohols, such as alcohols comprising 1 to 8 carbon atoms. In some cases, the water present in the reaction renders the controlling of the reaction easier.

According to yet another embodiment an end-blocker is present in the polymerisation step. Said end-blocker can be selected from the group consisting of linear low molecular weight siloxanes, such as 1,1,3,3-tetravinyl dimethysiloxane. The end-blocker can be used to regulate the molar mass of the polymer or to introduce functional groups to the polymer.

According to an embodiment of the invention said second catalyst is selected from the group consisting of phosphazene bases, ammonium silanolates, potassium silanolates, sodium silanolates, lithium silanolates and mixtures thereof.

Phosphazene bases are efficient catalysts in polymerisation reactions and the amount of catalyst used can be rather small, for example 1-2000 ppm based on the amount of siloxane, preferably 2-1000 ppm and more preferably 2-500 ppm. In practice, the amount of catalyst is also dependent on the reaction rate and the desired molar mass of the polymer. The amount of catalyst can be, for example, from 2 to 200 ppm.

Any suitable phosphazene base can be used as a catalyst, especially those that are in liquid form or that can be dissolved in a liquid. Some examples of commercially available phosphazene bases are 1-tert-butyl-4,4,4-tris(dimethylamino)-2,2-bis[tris(dimethylamino)-phosphoranylidenamino]-2Δ⁵,4Δ⁵-catenadi(phosphazene), 1-tert-butyl-2,2,4,4,4-pentakis(dimethylamino)- 2Δ⁵,4Δ⁵-catenadi(phosphazene) and 1-tert-octyl-4,4,4-tris(dimethylamino)-2,2-bis[tris(dimethylamino)-phosphoranylidenamino]-2Δ⁵,4Δ⁵-catenadi(phosphazene).

The reaction time in the polymerisation step can vary from 30 minutes to several hours, depending on the activity of the catalyst and on the desired product. The polymerisation temperature can vary from room temperature to 250 °C, preferably from 80 to 200 °C and more preferably from 120 to 150 °C.

The polymerisation reaction can be controlled by taking samples at regular intervals and by analysing them with any known method, such as following the molar mass by gel permeation chromatography. The polymerisation reaction can be stopped by adding a suitable neutralising reagent that inactivates the catalyst. Typically, the catalyst residues can be removed from the product by any known method. Also typically, the reactions are performed under inert atmosphere, such as nitrogen.

The invention further relates to a hydrophilic polysiloxane obtainable by the method according to the present invention. According to an embodiment of the invention, the polymer material is curable, i.e. cross-linkable with a peroxide or a platinum compound. The details and embodiments listed above also apply to this hydrophilic polysiloxane according to the present invention.

The invention yet further relates to a method for manufacturing a hydrophilic siloxane elastomer, comprising cross-linking a polysiloxane according to the present invention, in the presence of a cross-linking catalyst, as well as to a hydrophilic siloxane elastomer obtainable by said method. According to one embodiment, the cross-linking catalyst can be for example a peroxide cross-linking catalyst or a platinum cross-linking catalyst.

The details and embodiments listed above also apply to this method and to the elastomer according to the present invention.

The elastomer is typically manufactured by cross-linking using any known catalysts and/or initiators, such as peroxides, irradiation, hydrosilylation or condensation. For example, organic vinyl specific or non-specific peroxides can be used, such as di-tert-butylperoxide and 2,5-bis-(tert-butylperoxide)-2,5-dimethylhexane or benzoylperoxide, tert-butylperoxy-2-ethylhexanoate and/or 2,4-dichlorobenzoylperoxide. The amount of catalyst varies, for example, from 0.1 to 5 parts per weight per 100 parts of siloxane.

Siloxane-based elastomer as used here can stand for an elastomer made of disubstituted siloxane units, wherein the substituents can be substituted or unsubstituted lower alkyls, preferably C₁ to C₆ alkyls or phenyl groups. A certain amount of the substituents attached to the silicon atoms are substituted oxyalkyl groups that are attached to the silicon atoms by a silicon-carbon bond.

By C₁ to C₆ alkyls in this context are meant methyl, ethyl, propyl, butyl, pentyl and hexyl, and all their isomers.

In the following, when substituted oxyalkyl groups are mentioned, it is meant such substituted oxyalkyl groups that are attached to the silicon atoms by a silicon-carbon bond.

According to one embodiment the elastomer composition can be formed of one single cross-linked siloxane based polymer. According to another embodiment, the elastomer composition can be formed of two interpenetrating elastomers. The first elastomer can then comprise substituted oxyalkyl groups as described above, and the second elastomer can be a siloxane based elastomer such as PDMS. The second elastomer can also comprise substituted oxyalkyl groups as described above.

According to yet another embodiment the elastomer composition may be a mixture comprising a siloxane based elastomer (for example PDMS) and at least one polysiloxane polymer or copolymer comprising substituted oxyalkyl groups. Also the siloxane based elastomer may comprise such substituted oxyalkyl groups.

According to an embodiment the elastomer composition also comprises a filler, such as amorphous silica, in order to increase the strength of the film made from the elastomer composition. Other possible fillers include aluminium oxide, titanium oxide, calcium carbonate, various fibres and barium sulphate. The amount of filler depends on the nature of the filler and the use of the elastomer. Reinforcing fillers, such as silica, are typically used in an amount from 1 to 50, preferably from 15 to 40 parts per weight and the other fillers in an amount from 1 to 200 parts per weight.

### EXPERIMENTAL

Polymerisations were carried out in an oil bath in a 100 ml round bottom glass vessel with mechanical stirring and under nitrogen atmosphere. Monomer and other starting chemicals, such as D'L-α-tocopherol (0,01 wt-%), vinyl comonomer (e.g tetramethyltetravinylcycloterasiloxane (MV₄), 0,01 mol-%) or vinyl copolymer and end blocker (e.g. tetramethyl divinyl disiloxane) were introduced to the vessel. Through changing the stoichiometry starting chemicals with each other the molecular weight of the polymer and crosslinking density of the prepared elastomer could be varied. Polymerisation temperature was 150 °C and mixing rather vigorous (200-400 rpm). When the temperature of the reaction solution reached 150 °C, 50 ppm of catalyst 1-tert-butyl-4,4,4-tris(dimethylamino)-2,2-bis[tris(dimethylamino)-phosphoranylidenamino]-2Δ⁵,4Δ⁵-catenadi(phosphazene) was added with microsyringe through the septum below the surface of the solution. Ring opening polymerisation started either right away and proceeded to the end fast or gradually during about 30 min. When polymerisation had reached the target, the catalyst was deactivated by the addition of an equivalent amount of tris(trimethylsilyl)phosphate. At the early stage of reaction the viscosity raised quickly and in some experiments the viscosity started to decline slightly during polymerisation. This phenomenon was attributed to the growing amount of low molecular weight cyclic molecules and linear molecules as polymerisation proceeded to its thermodynamic equilibrium.

### Example 1

### Starting chemicals

Substituent: Allylethylether (Aldrich)
Starting siloxane: Heptamethylcyclotetrasiloxane (Clariant)
Catalyst of the monomer synthesis: Pt-divinyltetramethyldisiloxane, 2.3 wt-% of Pt in xylene (ABCR)
Polymerisation catalyst: Phosphazene base (1-tert-butyl-4,4,4-tris(dimethylamino)-2,2-bis[tris(dimethylamino)-phosphoranylidenamino]-2Δ⁵,4Δ⁵-catenadi(phosphazene) (Fluka Chimika)
Co-catalyst: D'L-α-tocopherol (Roche)
Vinylcomonomer: 1,3,5,7-tetravinyl-1,3,5,7-tetramethylcyclotetrasiloxane, MV₄ (Gelest)
End blocker: Vinyl terminated poly(dimethylsiloxane), DMS-V21 (ABCR)
Polymerisation catalyst deactivator: tris(trimethylsilyl)phosphate (Fluka Chimika)

### Monomer synthesis

Heptamethylcyclotetrasiloxane and allylethylether were weighed in a 50 ml glass round bottom vessel equipped with reflux condenser, the stoichiometric relation used was 1.1:1 (vinyl:SiH). The vessel was placed in an oil bath and nitrogen was purged through the vessel. The oil bath was heated up to 65 °C and the catalyst (20 ppm Pt) was added with a microsyringe through the septum into the reaction solution. After a few minutes there was an exotherm and the colour of the medium changed from clear to brownish. The reaction was followed with FT-IR by the disappearance of SiH (2100 cm⁻¹) and vinyl (1650 cm⁻¹) absorptions. Samples were taken regularly every hour and after 2.5 hours the reaction had finished according to FTIR (vinyl peak at 1650 cm⁻¹ disappeared).

The monomer thus prepared (1,1-3,3-5,5-7-heptamethyl-7-propylethylether-cyclotetrasiloxane) was distilled under reduced pressure (P < 10 mbar). It was found out that the most of the predistillate was unreacted heptamethylcyclotetrasiloxane. Distillation was also carried out to remove the platinum from the monomer (distillate). The purity of the monomer was analyzed with gas chromatography (Agilent Technologies 6890 N network GC System, FID detector) and it was found to be 95 % pure (area %).

### Polymerisation of 1,1-3,3-5,5-7-heptamethyl-7-propylethylether-cyclotetrasiloxane

Ring opening polymerisation was carried out in a 100 ml glass round bottom vessel with overhead stirring, under nitrogen atmosphere. The temperature of the polymerisation was set to 150 °C. The vessel was charged with 25 g of monomer (98.69 wt-%), 0,01 wt-% of D'L-α-tocopherol, 0.10 wt-% of MV₄ and 1.20 wt-% of end blocker. When the reaction medium had reached the target temperature, phosphazene catalyst (50 ppm) was added through the septum. Polymerisation initiated slowly, until after 10 minutes there was a notable rise in the viscosity. Polymerisation was continued with a slower mixing for 30 min, after which the catalyst was deactivated with an equivalent amount of tris(trimethylsilyl)phosphate.

The polymer was then stripped from volatile components in a short path wiped film evaporator (P < 1 mbar, T = 90 C°). This was carried out to remove unreacted monomer and low molecular weight cyclic and linear molecules from the polymer.

### Example 2

### Starting chemicals

### Substituent: n-Butylvinylether (BASF)

Starting siloxane: Heptamethylcyclotetrasiloxane (Clariant)
Catalyst of the monomer synthesis: Pt-divinyltetramethylidisiloxane, 2.3 wt-% of Pt in xylene (ABCR)
Polymerisation catalyst: Phosphazene base (1-tert-butyl-4,4,4-tris(dimethylamino)-2,2-bis[tris(dimethylamino)-phosphoranylidenamino]-2Δ⁵,4Δ⁵-catenadi(phosphazene) (Fluka Chimika)
Vinylcomonomer: 1,3,5,7-tetravinyl-1,3,5,7-tetramethylcyclotetrasiloxane, MV₄ (Gelest)
End blocker: 1,1,3,3-tetravinyldimethyldisiloxane (ABCR)
Polymerisation catalyst deactivator: tris(trimethylsilyl)phosphate (Fluka Chimika)

### Monomer synthesis

The same steps as in Example 1 were used for the monomer synthesis. The substituent (n-butylvinylether) used made the reaction proceed much faster (total time 0.5 h) and complete. No extra Si-H were observed according to FTIR (at 2050 cm⁻¹). Product 1,1-3,3-5,5-7-heptamethyl-7-ethylbutylether-cyclotetrasiloxane was purified by distillation.

### Polymerisation of 1,1-3,3-5,5-7-heptamethyl-7-ethylbutylether-cyclotetrasiloxane

The same steps as in Example 1 were used for the polymer synthesis. The charged starting chemicals were 25 g of 1,1-3,3-5,5-7-heptamethyl-7-ethylbutylether-cyclotetrasiloxane (99.4 wt-%), 0.10 wt-% vinyl comonomer (MV₄) and 0.80 wt-% of end-blocker. To start the polymerisation the needed catalyst amount was 100 ppm that was charged in two steps through septum over a time of 30 minutes. Polymerisation resulted in a polymer with lower molecular weight when compared to Example 1.

### Example 3

### Starting chemicals

Substituent: n-Butylvinyl ether (BASF)
Starting siloxane: Heptamethylcyclotetrasiloxane (Clariant)
Catalyst of the monomer synthesis: Pt-divinyltetramethyldisiloxane, 2.3 wt-% of Pt in xylene (ABCR)
Polymerisation catalyst: Phosphazene base (1-tert-butyl-4,4,4-tris(dimethylamino)-2,2-bis[tris(dimethylamino)-phosphoranylidenamino]-2Δ⁵,4Δ⁵-catenadi(phosphazene) (Fluka Chimika)
Co-catalyst: D'L-α-tocopherol (Roche)
Vinylcomonomer: 1,3,5,7-tetravinyl-1,3,5,7-tetramethylcyclotetrasiloxane, MV₄ (Gelest)
End blocker: 1,1,3,3-tetravinyldimethylsiloxane, (ABCR)
Polymerisation catalyst deactivator: tris(trimethylsilyl)phosphate (Fluka Chimika)

### Monomer synthesis

The same steps as in Example 1 were used for the monomer synthesis. This time with different substituent (n-Butylvinyl ether) the reaction was much faster and it was complete after 0.5 h. No Si-H groups were remaining according to FT-IR.

### Polymerisation of 1,1-3,3-5,5-7-heptamethyl-7-ethylbutylether-cyclotetrasiloxane

The same steps as in Example 1 were used for the polymerisation. Polymerisation started faster (according to viscosity) and was more complete than in Examples 1 and 2.

### Example 4

### Starting chemicals

Substituent: 2-Allylcyclohexanone (Aldrich)
Starting siloxane: Heptamethylcyclotetrasiloxane (Clariant)
Catalyst of the monomer synthesis: Pt-divinyltetramethyldisiloxane, 2.3 wt-% of Pt in xylene (ABCR)
Polymerisation catalyst: Phosphazene base (1-tert-butyl-4,4,4-tris(dimethylamino)-2,2-bis[tris(dimethylamino)-phosphoranylidenamino]-2Δ⁵,4Δ⁵-catenadi(phosphazene) (Fluka Chimika)
Co-catalyst: D'L-α-tocopherol (Roche)
Vinylcomonomer: 1,3,5,7-tetravinyl-1,3,5,7-tetramethylcyclotetrasiloxane, MV₄ (Gelest)

### Monomer synthesis

The same steps as in Example 1 were used for the monomer synthesis. Hydrosilation reaction happened gradually during 2 hours (according to FTIR), the colour changed to yellowish concurrently. The product 1,1-3,3-5,5-7-heptamethyl-7-propylcyclohexanone-cyclotetrasiloxane was purified by distillation.

### Polymerisation of 1,1-3,3-5,5-7-heptamethyl-7-propylcyclohexanone-cyclotetrasiloxane

The same steps as in Example 1 were used for the polymerisation. Polymerisation did not start until the amount of catalyst, that was gradually added, was 600 ppm. Polymerisation proceeded slower than in experiments 1 to 3.

### Example 5

### Starting chemicals

Substituent: n-Butylvinyl ether (BASF)
Starting siloxane: Heptamethylcyclotetrasiloxane (Clariant)
Catalyst of the monomer synthesis: Pt-divinyltetramethyldisiloxane, 2.3 wt-% of Pt in xylene (ABCR)
Polymerisation catalyst: Phosphazene base (1-tert-butyl-4,4,4-tris(dimethylamino)-2,2-bis[tris(dimethylamino)-phosphoranylidenamino]-2Δ⁵,4Δ⁵-catenadi(phosphazene) (Fluka Chimika)
Co-catalyst: D'L-α-tocopherol (DSM)
Vinylcomonomer: 1,3,5,7-tetravinyl-1,3,5,7-tetramethylcyclotetrasiloxane, MV₄ (Gelest)
End blocker: 1,1,3,3-tetravinyldimethylsiloxane, (ABCR)
Polymerisation catalyst deactivator: tris(trimethylsilyl)phosphate (Fluka Chimika)

### Monomer synthesis

The same steps as in Example 1 were used for the monomer synthesis. Reaction time was faster than in examples 1 and 2, that is, approximately 10 minutes. At the end of the reaction, the medium did not contain any SiH groups according to FTIR. Product 1,1-3,3-5,5-7-heptamethyl-7-ethylbutylether-cyclotetrasiloxane was purified by distillation.

### Polymerisation of 1,1,3,3,5,5,7-heptamethyl-7-ethylbutylether-cyclotetrasiloxane

The same steps as in Example 1 were used for the polymerisation. Polymerisation reaction was successful.

### Example 6

### Starting chemicals

Substituent: Allylethylether (Aldrich)
Starting siloxane: Heptamethylcyclotetrasiloxane (Clariant)
Catalyst of the monomer synthesis: Pt-divinyltetramethyldisiloxane, 2.3 wt-% of Pt in xylene (ABCR)
Polymerisation catalyst: Phosphazene base (1-tert-butyl-4,4,4-tris(dimethylamino)-2,2-bis[tris(dimethylamino)-phosphoranylidenamino]-2Δ⁵,4Δ⁵-catenadi(phosphazene) (Fluka Chimika)
Co-catalyst: D'L-α-tocopherol (Roche)
Vinylcomonomer: 1,3,5-trivinyl-1,3,5-trimethylcyclotetrasiloxane, MV₃ (Gelest)
End blocker: Vinyl terminated poly(dimethylsiloxane), DMS-V21 (ABCR)
Polymerisation catalyst deactivator: tris(trimethylsilyl)phosphate (Fluka Chimika)
Reinforcing fumed silica: Aerosil R106 (Degussa)
Curing agent: tertbutylperoxy-2-ethylehexanoate TBPEH, (Interchim Austria)

### Monomer synthesis

The allylethylether and heptamethylcyclotetrasiloxane were charged in a round bottom glass vessel equipped with reflux condenser. The vinyl/SiH stoichiometry was 1.1:1. The vessel was set in an oil bath and the reaction was carried under nitrogen atmosphere. Oil bath was heated to 65 °C and the catalyst (20 ppm Pt) was added through septum. After a few minutes an exotherm was noticed and concurrently the colour of reaction medium changed from clear to brownish. The reaction was followed with FT-lR by the disappearance of SiH (2100 cm⁻¹) and vinyl (1650 cm⁻¹) absorptions. Samples were taken regularly every hour and after 2.5 hours the reaction had finished according to FTIR (vinyl peak at 1650 cm⁻¹ had disappeared). The monomer thus prepared (1,1-3,3-5,5-7-heptamethyl-7-propylethylether-cyclotetrasiloxane), was distilled under reduced pressure (p < 10 mbar). It was found out that the most of the predistillate was unreacted heptamethylcyclotetrasiloxane. Distillation was also carried out to remove the platinum from the monomer (distillate). The purity of the monomer was analyzed with GC and it was found to be 95 % pure (area %).

### Polymerisation of 1,1,3,3,5,5,7-heptamethyl-7-propylethylether-cyclotetrasiloxane)

Ring opening polymerization was carried out in a 100 ml glass round bottom vessel with overhead stirring, under nitrogen atmosphere. The temperature of the polymerisation was set to 150 °C. The vessel was charged with 25 g of monomer (98.09 wt-%), 0.01 wt-% of D'L-α-tocopherol, 0.70 wt-% of MV₃ and 1.20 wt-% of end blocker. When the reaction medium had reached the target temperature, phosphazene catalyst (50 ppm) was added through the septum. Polymerisation initiated slowly, until after 10 minutes there was a notable rise in the viscosity. Polymerisation was continued with a slower mixing for 30 min, after which the catalyst was deactivated with an equivalent amount of tris(trimethylsilyl)phosphate.

The polymer was then stripped from volatile components in a short path wiped film evaporator (P < 1 mbar, T = 90 °C). This was carried out to remove unreacted monomer and low molecular weight cyclic molecules and linear molecules from the polymer.

### Elastomer preparation

The stripped polymer was compounded in a kneading mill with 25 wt-% of fumed silica and 1.5 wt-% of TBPEH-peroxide. When the base in the mill was homogeneous, it was used to prepare sheets of different thicknesses in a hot press (120 °C) between release films. These sheets were subsequently post cured in vacuum oven (100 °C, P < 10 mbar, 1 h) to remove the peroxide decomposition products.

## Claims

1. Use of tocopherol as a co-catalyst in the ring opening polymerisation of cyclic siloxanes.

2. Use according to claim 1, **characterised in that** said tocopherol is selected from the group consisting of D'L-α-tocopherol, RRR-α-tocopherol, D'L-α-tocopherol acetate and RRR-α-tocopherol acetate.

3. Use according to claim 1, **characterised in that** the cyclic siloxane is selected from the group consisting of heptamethyl cyclotetrasiloxane and tetramethyl cyclotetrasiloxane.

4. A method for manufacturing hydrophilic polysiloxane polymers, wherein a hydrido-containing cyclic siloxane is reacted with a hydrophilic molecule comprising a carbon-carbon double bond, having the general formula (I) or (II)
(I) H₂C=CH-(CHR)ₙ-O-(CHR¹CR²R³)ₘR⁴
(II) H₂C=CH-(CHR)ₙ-R⁵
wherein n is an integer from 0 to 4, m is an integer from 0 to 5, R, R¹, R², R³ and R⁴ are each independently hydrogen or a C₁ to C₆ alkyl, R⁵ is a saturated cyclic hydrocarbon containing carbonyl group, in the presence of a first catalyst to obtain a monomer, and polymerising said monomer in the presence of a second catalyst and tocopherol as a co-catalyst.

5. The method according to claim 4, **characterised in that** the cyclic siloxane is selected from the group consisting of heptamethyl cyclotetrasiloxane and tetramethyl cyclotetrasiloxane.

6. A hydrophilic polysiloxane obtainable by the method of claim 4.

7. A method for manufacturing a hydrophilic siloxane elastomer, comprising cross-linking a polysiloxane according to claim 6 in the presence of a cross-linking catalyst.

8. The method according to claim 7, **characterised in that** the cross-linking catalyst is selected from the group consisting of peroxide cross-linking catalyst and platinum cross-linking catalyst.

9. A hydrophilic siloxane elastomer obtainable by the method of claim 7.
